Europäisches Patentamt

European Patent Office

Office européen des brevets

(11) Numéro de publication : **0 478 482 A2**

# (12) DEMANDE DE BREVET EUROPEEN

(21) Numéro de dépôt : **91440077.5**

(51) Int. Cl.⁵ : **E04B 1/58**

(22) Date de dépôt : **26.09.91**

(30) Priorité : **28.09.90 FR 9012147**

(43) Date de publication de la demande :
**01.04.92 Bulletin 92/14**

(84) Etats contractants désignés :
**AT BE CH DE DK ES FR GB GR IT LI LU NL SE**

(71) Demandeur : **ETABLISSEMENTS
RAVOYARD-KIT 2000, S.A.
Vaudrey
F-39380 Mont-sous-Vaudrey (FR)**

(72) Inventeur : **Ravoyard, Michel
F-39380 Mont-Sous-Vaudrey (FR)**

(74) Mandataire : **Nithardt, Roland et al
CABINET NITHARDT & BURKARD S.A., 24 rue
de l'Est - B.P. 1445
F-68071 Mulhouse Cédex (FR)**

(54) **Dispositif de fixation de tubes entre des profiles de charpente métallique.**

(57) L'invention concerne un dispositif de fixation de tubes transversaux **(13)** entre des profilés parallèles **(5)** de charpente métallique, le dispositif comportant des embouts mâles **(11)** et femelles **(12)** qui sont emboîtés et bloqués dans les extrémités des tubes **(13)**. L'embout femelle contient une douille filetée **(30)** qui se visse sur le boulon **(15)**. Chaque embout **(11, 12)** peut être composé de deux pièces identiques moulées en une matière synthétique chargée d'un élastomère. Il a un fût cylindrique engagé dans le tube **(13)** et pourvu de deux paires d'encoches latérales dans lesquelles sont engagés des plis transversaux **(44)** formés par sertissage dans la paroi du tube. Le fût de chaque embout est comprimé axialement par une tête élargie **(25,43)** du boulon et de la douille, de sorte qu'il se bloque par gonflement dans le tube.

EP 0 478 482 A2

FIG.4

L'invention concerne un dispositif de fixation de tubes transversaux entre des profilés parallèles de charpente métallique, notamment de tubes distanceurs entre des pannes ou des lisses en tôle pliée, le dispositif comportant un embout mâle en matière synthétique, ayant un fût agencé pour être emboîté dans une extrémité d'un premier tube et une tête extérieure agencée pour être interposée entre l'extrémité du tube et un côté d'un desdits profilés, et un embout femelle en matière synthétique, ayant un fût agencé pour être emboîté dans une extrémité d'un second tube aligné avec le premier et une tête extérieure agencée pour être interposée entre l'extrémité du tube et le côté opposé dudit profilé, l'embout mâle étant pourvu d'un boulon axial ayant une tige filetée proéminente agencée pour traverser un trou transversal du profilé, et l'embout femelle étant pourvu d'une douille intérieure filetée à visser sur ladite tige du boulon de l'embout mâle, les fûts de l'embout mâle et de l'embout femelle ayant des paires d'encoches transversales opposées sur leur surface extérieure pour permettre un sertissage du tube correspondant.

Les pannes ou lisses constituées par des profilés en tôle pliée sont généralement fixées par une de leurs ailes sur des poutres de la charpente métallique. Comme elles présentent une faible rigidité transversale, on les relie souvent par des éléments distanceurs, appelés généralement liernes, qui sont fixés à l'âme ou à l'autre aile par des pannes ou lisses. Dans une forme connue, ces liernes sont des tubes d'acier ayant des embouts en métal ou en matière synthétique rigide. Toutefois, quand ils subissent des efforts relativement grands, ces embouts ont tendance à se casser ou laisser apparaître du jeu entre l'embout et le tube, ou bien entre l'embout et la douille ou un écrou jouant le même rôle.

La publication GB-A-2 169 678 décrit un dispositif tel que défini en préambule, où chaque embout est composé de deux pièces identiques jointes suivant un plan axial et formant des logements internes respectifs pour la tête hexagonale du boulon et pour un écrou servant de douille dans l'embout femelle. Chacun de ces logements se trouve immédiatement derrière la tête extérieure de l'embout, donc entre cette tête et la plus grande partie du fût de l'embout, où se trouvent les encoches transversales et où des efforts de traction, de flexion et de cisaillement se transmettent entre l'embout et le tube serti sur lui. Il en résulte que l'embout doit pouvoir résister à des contraintes élevées sans se déformer ou se rompre. En outre, le sertissage risque de prendre du jeu. C'est pourquoi, la publication citée prévoit de réaliser ces embouts en résine renforcée de fibres de verre ou en métal coulé.

La présente invention a pour but de perfectionner un tel dispositif de manière à lui permettre une fixation sûre des tubes transversaux entre eux et aux profilés qu'ils relient.

Dans ce but, l'invention concerne un dispositif du genre indiqué plus haut, caractérisé en ce que le boulon et la douille sont placés dans des alésages respectifs s'étendant sur la majeure partie de la longueur du fût des embouts respectifs et ont chacun une tête élargie qui, lorsque l'extrémité formée par la tête extérieure de l'embout est pressée contre le profilé par vissage du boulon dans la douille, exerce une pression axiale sur un épaulement correspondant de l'embout à l'autre extrémité de l'embout, de sorte que le fût est comprimé axialement sur la majeure partie de sa longueur.

De préférence, l'embout mâle est formé de deux pièces moulées semblables délimitant entre elles un logement pour la tête du boulon et un alésage cylindrique pour la tige filetée du boulon, le diamètre de cet alésage étant inférieur au diamètre extérieur des filets de la tige, de façon que les filets pénètrent dans la matière synthétique quand les deux pièces sont serrées l'une contre l'autre dans le tube. Ledit logement pour la tête du boulon peut être à six pans. Il peut être au moins partiellement fermé par un rebord de retenue du côté opposé à la tête de l'embout, pour éviter le changement de position du boulon pendant les manipulations ou en cas de choc au montage.

De préférence, l'embout femelle est formé de deux pièces moulées semblables délimitant entre elles un logement pour la douille filetée, ce logement comportant un alésage cylindrique, et la douille comportant des arêtes longitudinales extérieures agencées pour pénétrer dans la matière synthétique quand les deux pièces sont serrées l'une contre l'autre dans le tube. La tête extérieure de la douille peut être formée par un collet extérieur engagé dans une rainure périphérique correspondante appartenant audit logement.

Dans une forme de réalisation particulière, lesdits épaulements de chaque embout peuvent être formés par la face d'extrémité correspondante de l'embout, c'est-à-dire que la tête élargie du boulon ou de la douille est appuyée directement contre l'extrémité de l'embout correspondant.

L'invention et ses avantages seront mieux compris à l'aide de la description suivante d'un exemple de réalisation, en référence aux dessins annexés, dans lesquels :

    – la figure 1 est une vue partielle en coupe verticale d'une halle à ossature métallique équipée de dispositifs de fixation selon l'invention,

    – la figure 2 est une vue en coupe d'un embout mâle d'un tel dispositif de fixation, accompagné du boulon qu'il doit contenir

    – la figure 3 est une vue en coupe d'un embout femelle de ce dispositif, accompagné de la douille qu'il doit contenir,

    – la figure 4 est une vue latérale du dispositif de fixation, reliant deux tubes fixés de part et d'autre de l'âme d'un profilé métallique, et

    – la figure 5 est une vue en perspective illustrant une autre forme de réalisation des embouts.

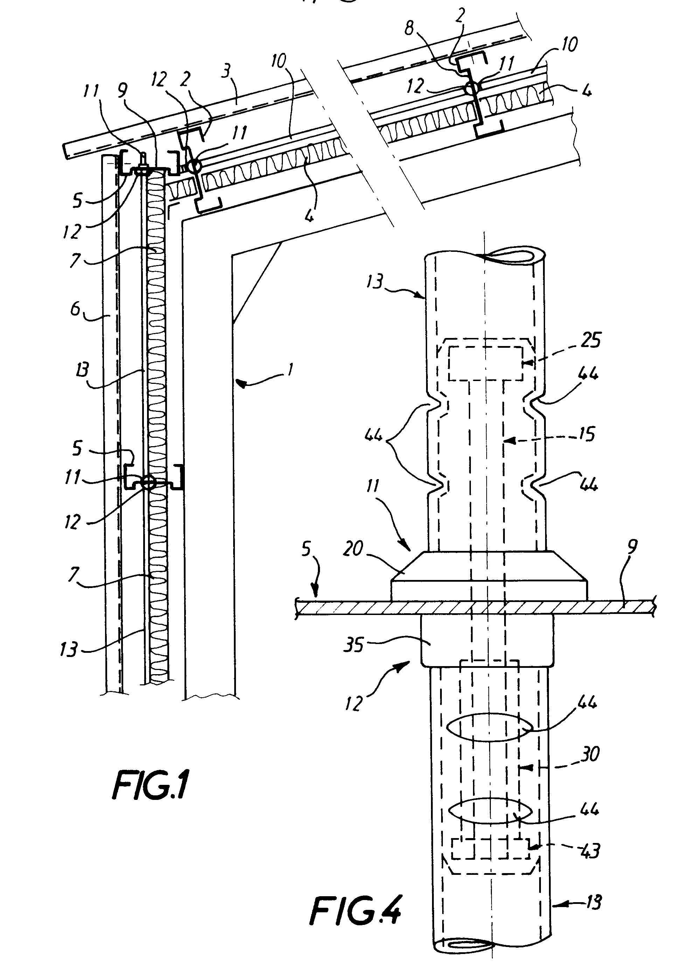

Dans la figure 1 on a représenté schématiquement une partie d'un bâtiment telle qu'une halle, ayant une ossature métallique comprenant des cadres transversaux rigides 1. Ces cadres portent une toiture comportant des pannes métalliques 2 qui supportent des panneaux de couverture 3 et des panneaux d'isolation 4. Les cadres 1 portent également une façade comportant des lisses métalliques horizontales 5 qui supportent des panneaux de façade 6 et des panneaux d'isolation 7. Les pannes 2 et les lisses 5 sont des profilés en tôle pliée ayant chacun une âme plate 8, 9. Les âmes des pannes 2 adjacentes sont reliées par des tubes distanceurs transversaux 10 dont les extrémités sont appuyées contre elles au moyen d'embouts mâles 11 et d'embouts femelles 12 qui assurent également la liaison entre les tubes 10 disposés dans le prolongement l'un de l'autre. Les lisses 5 sont également reliées par des tubes distanceurs verticaux 13 fixés au moyen de tels embouts 11 et 12.

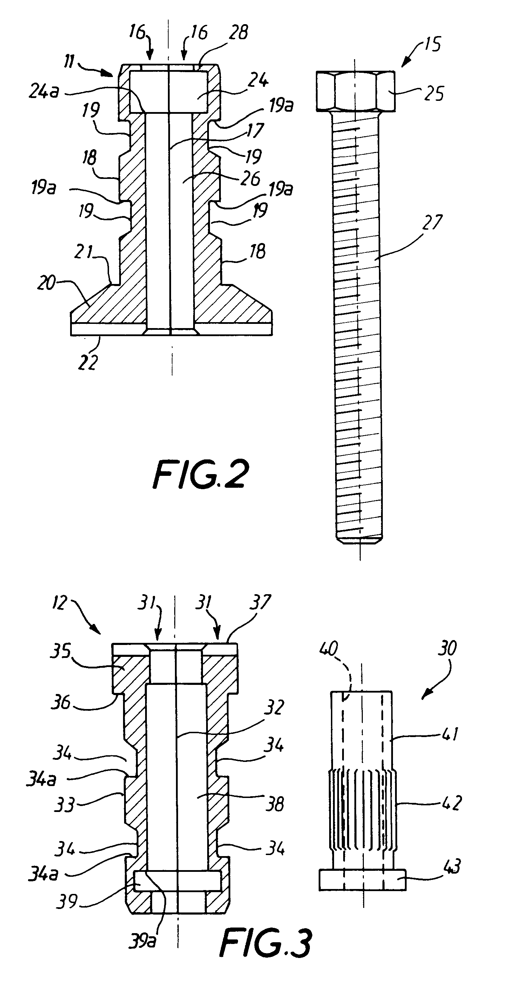

La figure 2 montre plus en détail un embout mâle 11 et un boulon 15 destiné à être logé dans cet embout. L'embout 11 est composé de deux pièces identiques 16 en matière synthétique moulée, ces deux pièces étant appliquées l'une contre l'autre le long d'un plan axial 17. De cette manière l'embout présente une surface extérieure cylindrique 18 formant un fût dont le diamètre correspond au diamètre intérieur du tube 10 ou 13 dans l'extrémité duquel ce fût doit être emboîté. Deux côtés opposés de cette surface 18 comportent chacun deux encoches transversales 19 dont le rôle apparaîtra plus loin. Ces encoches ont des arêtes vives 19a le long de la surface 18. A l'extérieur du tube, l'embout 11 présente une tête élargie 20 ayant un épaulement arrière 21 destiné à buter contre l'extrémité du tube, et une face avant plane 22 destinée à être appliquée contre une panne 2 ou une lisse 5. A l'intérieur de l'embout 11, les deux pièces 16 assemblées délimitent un logement à six pans 24, destiné à recevoir la tête 25 du boulon 15, et un alésage axial cylindrique 26 destiné à recevoir la tige filetée 27 du boulon 15. Le logement 24 forme, autour de l'alésage 24, un épaulement 24a contre lequel s'appuie la tête 25 du boulon. Le diamètre de l'alésage 26 est avantageusement un peu plus petit que le diamètre extérieur du filetage du boulon, de sorte que le filetage mord dans la paroi de l'alésage 26 quand les deux pièces de l'embout 11 sont serrées l'une contre l'autre dans le tube métallique, ce qui maintient solidement le boulon en direction axiale. Vers l'arrière, le logement 24 de la tête du boulon est fermé partiellement par un rebord 28 empêchant que le boulon s'échappe une fois qu'on l'a logé entre les deux pièces 16 de l'embout.

L'embout 11 est relativement long, afin d'avoir une grande surface de contact avec le tube et de ménager suffisamment de place pour les encoches 19. Il peut avantageusement être fait d'une matière synthétique légèrement déformable élastiquement. De la sorte, quand l'embout est fortement comprimé axialement entre la tête 25 du boulon et le profilé appuyé contre sa face frontale 22, il a tendance à se gonfler transversalement conformément à la loi de Poisson et donc à se bloquer d'autant mieux dans le tube métallique. Les arêtes vives 19a s'accrochent alors au tube par un effet de harpon. D'autre part, la tige 27 du boulon est fortement serrée dans l'embout et soulage le fût de tous les efforts de traction et de cisaillement qui pourraient lui être appliqués par le tube. Le fût travaille donc essentiellement en compression et peut être fait d'une matière synthétique non renforcée.

La figure 3 montre un embout femelle 12 en matière synthétique et une douille métallique 30 destinée à être logée dans cet embout et à être vissée comme un écrou sur le boulon 15 d'un embout mâle 11. L'embout 12 est composé de deux pièces moulées identiques 31 en matière synthétique, appliquées l'une contre l'autre le long d'un plan axial 32. Comme dans le cas de l'embout mâle, ces deux pièces assemblées ont une surface extérieure cylindrique 33 formant un fût destiné à s'ajuster dans une extrémité d'un des tubes métalliques 10 ou 13 et pourvu de deux paires d'encoches opposées 34 identiques aux encoches 19, avec des arêtes vives 34a. L'embout 12 a également une tête élargie 35 pourvue d'un épaulement arrière 36, destiné à buter contre l'extrémité du tube, et d'une face frontale plate 37 destiné à être appliquée contre une panne ou une lisse. A l'intérieur, l'embout 12 contient un logement pour la douille 30, ce logement étant formé par un alésage cylindrique 38 et par une rainure circonférentielle 39 à l'arrière de cet alésage. Cette rainure forme, autour de l'alésage 38, un épaulement 39a. La douille 30 comporte quant à elle un alésage axial fileté 40 destiné à recevoir la tige filetée 27 du boulon, un corps cylindrique 41 ayant de fines arêtes longitudinales saillantes 42 sur une partie de sa longueur, et une tête arrière élargie formée par un collet circulaire 43 destiné à se loger dans la rainure 39 quand on assemble les deux pièces 31 de l'embout, afin de maintenir axialement la douille en s'appuyant contre l'épaulement 39a en cas de forte traction.

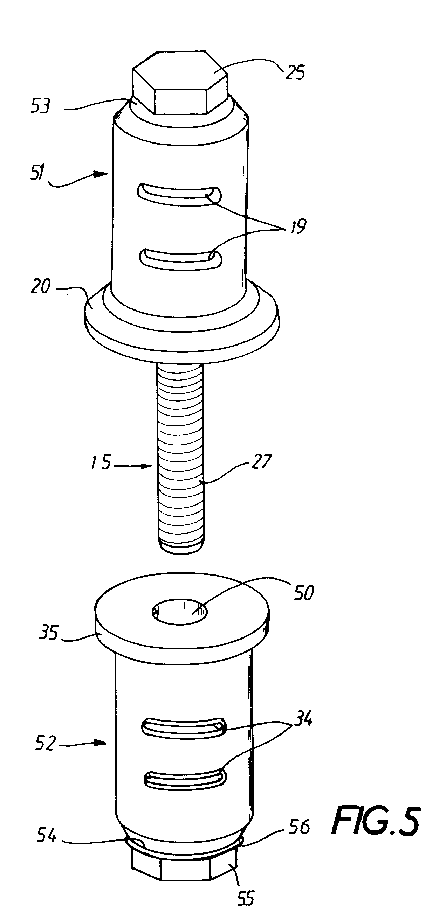

La figure 4 montre un embout mâle 11 et un embout femelle 12 utilisés pour assembler les extrémités de deux tubes distanceurs 13 l'une à l'autre, ainsi qu'à l'âme 9 d'un profilé formant une lisse 5. L'extrémité de chaque tube 13 est sertie sur l'embout 11, 12 correspondant par déformation de sa paroi de façon à former des plis rentrants 44 qui sont opposés deux à deux et qui s'engagent dans les encoches opposées 19, 34 des embouts. De cette manière, ceux-ci sont bloqués dans les tubes, aussi bien contre un coulissement axial que contre une rotation.

Pour monter les tubes 13 équipés des embouts 11 et 12 et les fixer au profilé 5, on peut par exemple placer d'abord le tube inférieur et amener son embout femelle 12 en face d'un trou ménagé dans l'âme 9 du profilé 5, puis insérer dans ce trou la tige filetée du boulon 15 de l'embout mâle 11 de l'autre tube. En faisant tourner ce tube, on visse le boulon dans la douille 30 de l'embout femelle jusqu'à ce que l'âme 9 soit fortement serrée entre les têtes élargies 20 et 35 des embouts 11 et 12. Comme on l'a expliqué plus haut, la traction dans le boulon a également pour effet de déformer la matière synthétique des deux embouts de façon à les bloquer transversalement dans les tubes 13. Ce phénomène augmente l'effet de sertissage des tubes sur les embouts.

La présente invention n'est pas limitée à l'exemple de réalisation décrit ci-dessus. En particulier les embouts ne sont pas nécessairement composés par assemblage de deux pièces identiques en matière synthétique sur une pièce métallique. La matière synthétique pourrait être surmoulée directement en une pièce sur la pièce métallique. Dans la variante illustrée par la figure 5, un embout mâle 51 et un embout femelle 52 sont faits chacun d'une seule pièce moulée en matière synthétique, traversée de bout en bout par un alésage cylindrique 50 dans lequel est inséré le boulon 15 vissé dans un écrou 55. La tête 25 du boulon s'appuie alors contre la face plate 53 de l'extrémité opposée à la tête 20 de l'embout mâle, de même que l'écrou 55 s'appuie contre la face plate 54 de l'embout femelle par l'intermédiaire d'une rondelle 56. Ainsi les deux embouts sont entièrement soumis à une forte compression axiale induisant une compression transversale des embouts à l'intérieur des tubes. L'embout femelle 52 peut être identique à l'embout femelle 12 comprenant la douille 30 noyée. Dans ce cas, le boulon 15 est directement vissé dans la douille 30.

**Revendications**

1. Dispositif de fixation de tubes transversaux (10,13) entre des profilés parallèles (2,5) de charpente métallique, notamment de tubes distanceurs entre des pannes ou des lisses en tôle pliée, le dispositif comportant un embout mâle (11,51) en matière synthétique, ayant un fût agencé pour être emboîté dans une extrémité d'un premier tube et une tête extérieure agencée pour être interposée entre l'extrémité du tube et un côté d'un desdits profilés, et un embout femelle (12,52) en matière synthétique, ayant un fût agencé pour être emboîté dans une extrémité d'un second tube aligné avec le premier et une tête extérieure agencée pour être interposée entre l'extrémité du tube et le côté opposé dudit profilé, l'embout mâle étant pourvu d'un boulon axial (15) ayant une tige filetée proéminente agencée pour traverser un trou transversal du profilé, et l'embout femelle étant pourvu d'une douille intérieure (30) filetée à visser sur ladite tige du boulon de l'embout mâle, les fûts de l'embout mâle (11,51) et de l'embout femelle (12,52) ayant des paires d'encoches transversales opposées (19,34) sur leur surface extérieure (18,33) pour permettre un sertissage du tube correspondant (10,13), caractérisé en ce que le boulon (15) et la douille (30) sont placés dans des alésages respectifs (26,28) s'étendant sur la majeure partie de la longueur du fût des embouts respectifs (11,12,51,52) et ont chacun une tête élargie (25,43) qui, lorsque l'extrémité formée par la tête extérieure (20,35) de l'embout est pressée contre le profilé (2,5) par vissage du boulon dans la douille, exerce une pression axiale sur un épaulement correspondant (24a,39a,53,54) de l'embout à l'autre extrémité de l'embout, de sorte que le fût est comprimé axialement sur la majeure partie de sa longueur.

2. Dispositif selon la revendication 1, caractérisé en ce que lesdites encoches transversales (19,34) se trouvent dans ladite partie axialement comprimée du fût de chaque embout.

3. Dispositif selon la revendication 2, caractérisé en ce que lesdites encoches transversales forment des arêtes vives (19a,34a) sur la surface extérieure du fût.

4. Dispositif selon l'une des revendications 1 à 3, caractérisé en ce que l'embout mâle (11) est formé de deux pièces moulées semblables (16) délimitant entre elles un logement (24) pour la tête du boulon et un alésage cylindrique (26) pour la tige filetée (27) du boulon, le diamètre de cet alésage étant inférieur au diamètre extérieur des filets de la tige, de façon que les filets pénètrent dans la matière synthétique quand les deux pièces (16) sont serrées l'une contre l'autre dans le tube (10,13).

5. Dispositif selon la revendication 4, caractérisé en ce que ledit logement (24) est au moins partiellement fermé par un rebord de retenue (28) du côté opposé à la tête de l'embout.

6. Dispositif selon l'une des revendications 1 à 5, caractérise en ce que l'embout femelle (12) est formé de deux pièces moulées semblables (31) délimitant entre elles un logement pour la douille filetée (30), ce logement comportant un alésage cylindrique (38), et la douille comportant des arêtes longitudinales extérieures (42) agencées pour pénétrer dans la matière synthétique quand les deux pièces (31) sont serrées l'une contre l'autre dans le tube.

7. Dispositif selon la revendication 6, caractérisé en ce que ladite tête élargie de la douille **(30)** est formée par un collet extérieur **(43)** engagé dans une rainure périphérique correspondante **(39)** appartenant audit logement.

8. Dispositif selon la revendication 1, caractérisé en ce que ledit épaulement **(53)** de l'embout mâle **(51)** est formé par une face d'extrémité de l'embout.

9. Dispositif selon la revendication 1, caractérisé en ce que ledit épaulement **(54)** de l'embout femelle **(52)** est formé par une face d'extrémité de l'embout.

FIG.1

FIG.4

FIG.2

FIG.3

8

FIG.5